# EUROPEAN PATENT APPLICATION

(11) **EP 4 438 823 A1**
(43) Date of publication of application: **02.10.2024**
(21) Application number: 22925719.1
(22) Date of filing: 09.12.2022
(51) Int. Cl.: E03D 9/00

(54) **TOILET AND WASTE DISCHARGE BOX ASSEMBLY THEREOF**

(30) Priority: 10.02.2022 CN 202220274854 U
(71) Applicant: Quanzhou Komoo Intelligent Kitchen & Bath Co., Ltd, Quanzhou, Fujian 362300 (CN)
(72) Inventor: LIN, Xiaofa, Quanzhou, Fujian 362300 (CN); LIN, Xiaoshan, Quanzhou, Fujian 362300 (CN); LIN, Shan, Quanzhou, Fujian 362300 (CN); XU, Yanxin, Quanzhou, Fujian 362300 (CN); XU, Rongrong, Quanzhou, Fujian 362300 (CN)
(74) Representative: Cameron Intellectual Property Ltd
(86) International application number: PCT/CN2022/137972
(87) International publication number: WO 2023/151368

(57) **Abstract**

A toilet and a waste discharge box assembly thereof. The waste discharge box assembly of the toilet comprises a waste discharge box (1), a waste discharge pipe (2), and a driving apparatus (3). The waste discharge box (1) is provided with a waste discharge inlet (11) and a waste discharge outlet (12); the waste discharge pipe (2) is disposed inside the waste discharge box (1), and an inlet end (21) of the waste discharge pipe (2) is connected to the waste discharge inlet (11); the driving apparatus (3) comprises a driving element (31) and a transmission mechanism (32); the driving element (31) is connected to the waste discharge pipe (2) by means of the transmission mechanism (32) and is configured to drive the waste discharge pipe (2) to rotate so as to switch between an initial state and a waste discharge state, and an axis (311) of an output shaft of the driving element is not colinear with a rotation axis (22) of the waste discharge pipe (2).

## Description

### Technical Field

Embodiments of the present application relate to, but are not limited to, the field of toilet technologies, and particularly relate to, but are not limited to, a sewage discharge box assembly of a toilet and a toilet including the sewage discharge box assembly.

### Background

In some cases, a toilet has a flippable sewage discharge pipe, and the sewage discharge pipe may be flipped to a sewage discharge state to realize sewage discharge for the toilet.

### Summary

The following is a summary of the subject matter described in detail herein. This summary is not intended to limit the protection scope of the claims.

A sewage discharge box assembly of a toilet includes a sewage discharge box, a sewage discharge pipe and a driving apparatus. The sewage discharge box has a sewage discharge inlet and a sewage discharge outlet, the sewage discharge pipe is provided in the sewage discharge box, and an inlet end of the sewage discharge pipe is connected with the sewage discharge inlet.

The driving apparatus includes a driving element and a transmission mechanism. The driving element is connected to the sewage discharge pipe through the transmission mechanism and is configured to drive the sewage discharge pipe to rotate so as to switch between an initial state and a sewage discharge state, and an axis of an output shaft of the driving element is not collinear with a rotation axis of the sewage discharge pipe.

A toilet includes a toilet body. The toilet body has a sewage discharge port. The toilet further includes the sewage discharge box assembly of the toilet discussed above. The sewage discharge port is communicated with the sewage discharge inlet of the sewage discharge box assembly.

Other aspects will become apparent after reading and understanding the drawings and detailed description.

### Brief Description of Drawings

The drawings are used for providing a further understanding of technical solutions of the present disclosure, and constitute a part of the specification. They are used together with embodiments of the present disclosure to explain the technical solutions of the present disclosure, and do not constitute a restriction on the technical solutions of the present disclosure.
FIG. 1 is a schematic sectional view of a structure of a sewage discharge box assembly according to an embodiment of the present application;
FIG. 2 is a schematic diagram of a structure of a sewage discharge pipe of the sewage discharge box assembly shown in FIG. 1 in an initial state;
FIG. 3 is a schematic diagram of a structure of a sewage discharge pipe of the sewage discharge box assembly shown in FIG. 1 in a sewage discharge state;
FIG. 4 is a schematic diagram of a three-dimensional structure of a rotary connector of the sewage discharge box assembly shown in FIG. 1;
FIG. 5 is a schematic front view of a structure of the rotary connector shown in FIG. 4;
FIG. 6 is a schematic left view of a structure of the rotary connector shown in FIG. 4;
FIG. 7 is a schematic bottom view of a structure of the rotary connector shown in FIG. 4;
FIG. 8 is a schematic sectional view of a structure of a sewage discharge box assembly according to another embodiment of the present application;
FIG. 9 is a schematic diagram of a structure of a sewage discharge pipe of the sewage discharge box assembly shown in FIG. 8 in an initial state;
FIG. 10 is a schematic diagram of a structure of a sewage discharge pipe of the sewage discharge box assembly shown in FIG. 8 in a sewage discharge state;
FIG. 11 is a schematic sectional view of a structure of a sewage discharge box assembly according to yet another embodiment of the present application;
FIG. 12 is a schematic diagram of a structure of a sewage discharge pipe of the sewage discharge box assembly shown in FIG. 11 in an initial state;
FIG. 13 is a schematic diagram of a structure of a sewage discharge pipe of the sewage discharge box assembly shown in FIG. 11 in a sewage discharge state; and
FIG. 14 is a schematic sectional view of a structure of a toilet according to an embodiment of the present application.

### Reference signs:

1-sewage discharge box, 11-sewage discharge inlet, 12-sewage discharge outlet, 13-mounting cavity, 2-sewage discharge pipe, 21-inlet end, 22-rotation axis, 23-outlet end, 24-driving part, 3-driving apparatus, 31-driving element, 311-axis of an output shaft of a driving element, 32-transmission mechanism, 321-driving wheel, 322-driven wheel, 323-transmission belt, 324-driving gear, 325-driven gear, 326-rack, 327-worm, 328-helical gear, 4-rotary connector, 41-rib, 5-toilet body, 51-sewage discharge port.

### Detailed Description

Technical solutions in embodiments of the present application will be clearly and completely described with reference to the drawings in the embodiments of the present application. Apparently, the described embodiments are only part of and not all of the embodiments of the present application. Based on the embodiments of the present application, all other embodiments obtained by those of ordinary skills in the art without making creative efforts fall within the scope of protection of the present application.

In addition, the technical solutions of the different embodiments of the present application may be combined with each other, but it needs to be based on the realization by those of ordinary skills in the art. When the combination of technical solutions is contradictory or cannot be realized, it should be considered that such combination of technical solutions does not exist, nor is it within the scope of protection required by the present application.

In the description of the present application, it is to be understood that the orientations or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" and the like are based on those shown in the drawings, which are only for convenience of describing the present application and simplifying the description and are not intended to indicate or imply that the referred device or element must have a particular orientation, or is constructed and operated in a particular orientation and therefore cannot be construed as limiting on the present application.

Furthermore, the terms "first", "second" are only used for descriptive purposes and cannot be understood to indicate or imply relative importance or imply the number of technical features indicated.

In the description of the present application, unless otherwise expressly specified and limited, the terms "installation", "coupling", "connection" shall be understood in a broad sense. For example, they may be a fixed connection, may be a detachable connection, or may be an integrated connection; they may be a mechanical connection, or they may be an electrical connection, or they may a communication with each other; they may be a direct connection, or an indirect connection through an intermediate medium, or they may be an internal connection between the two elements, or they may be an interaction relationship between the two elements. For those of ordinary skills in the art, specific meanings of the above terms in the present application can be understood according to specific situations.

In the present application, unless otherwise expressly specified and limited, a first feature being "above" or "below" a second feature may include a direct contact between the first and second features, or may include the first and second features not in direct contact but in contact by another feature between them. Moreover, the first feature being "on", "above" and "over" the second feature may include the first feature being directly above and obliquely above the second feature, or simply indicate that the first feature is horizontally higher than the second feature. The first feature being "under", "below" and "underneath" the second feature may include the first feature being directly below and obliquely below the second feature, or simply indicate that the first feature is horizontally lower than the second feature.

The disclosure below provides many different implementations or examples for implementing different structures of the present application. In order to simplify the disclosure of the present application, components and arrangements of particular examples are described below. Of course, they are merely examples and are not intended to limit the present application. In addition, the present application may repeat reference numbers and/or reference letters in different examples, such repetition being for simplification and clarity purposes and not per se indicative of a relationship between the various implementations and/or arrangements discussed. In addition, the present application provides various examples of specific processes and materials, but those of ordinary skills in the art may be aware of the application of other processes and/or the use of other materials.

In some cases, for a toilet with a flippable sewage discharge pipe, a driving motor of the sewage discharge pipe and the sewage discharge pipe are arranged side by side in front and rear, and an axis of an output shaft of the driving motor is collinear with a rotation axis of the sewage discharge pipe, so that a size of the toilet is increased in a front and rear direction, a volume of the toilet is large, and a space occupied by the toilet is large.

An embodiment of the present application provides a sewage discharge box assembly of a toilet. A sewage discharge pipe of the sewage discharge box assembly may rotate in the sewage discharge box to switch between an initial state and a sewage discharge state, so as to realize the sewage discharge for the toilet in the sewage discharge state.

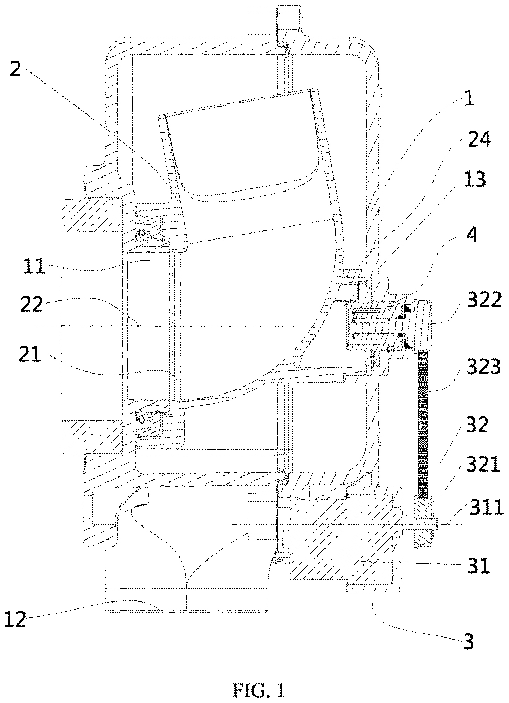

As shown in FIGS. 1-3, the sewage discharge box assembly of the toilet according to an embodiment of the present application includes a sewage discharge box 1, a sewage discharge pipe 2, and a driving apparatus 3. The sewage discharge box 1 has a sewage discharge inlet 11 and a sewage discharge outlet 12, the sewage discharge pipe 2 is provided in the sewage discharge box 1, and an inlet end 21 of the sewage discharge pipe 2 is connected to the sewage discharge inlet 11.

The driving apparatus 3 includes a driving element 31 and a transmission mechanism 32. The driving element 31 is connected to the sewage discharge pipe 2 by the transmission mechanism 32, and is configured to drive the sewage discharge pipe 2 to rotate so as to switch between an initial state and a sewage discharge state, and an axis 311 of an output shaft of the driving element 31 is not collinear with a rotation axis 22 of the sewage discharge pipe 2.

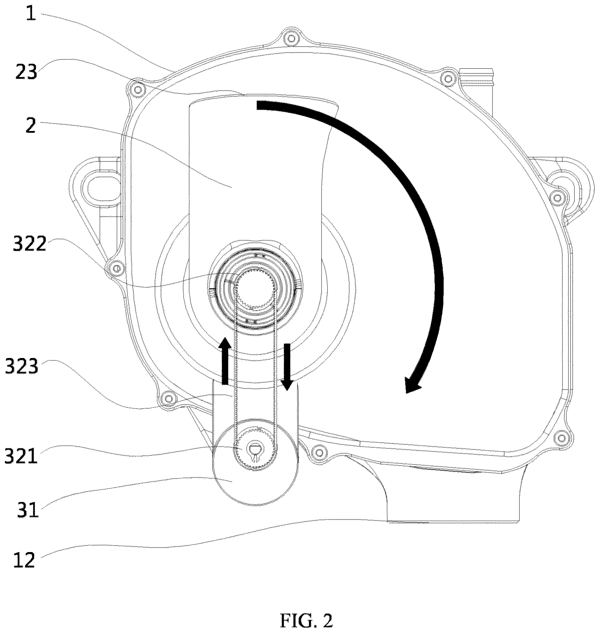

In the sewage discharge box assembly of the toilet according to an embodiment of the present application, a function of rotating the sewage discharge pipe 2 to switch between the initial state and the sewage discharge state is realized by the driving apparatus 3. FIGS. 2-3 show schematic diagrams of structures of sewage discharge box assembly of the toilet according to one embodiment of the present application in the initial state and in the sewage discharge state respectively, and directions of circular arc arrows in the figures indicate rotation directions of the sewage discharge pipe 2 when switching between the initial state and the sewage discharge state.

A sewage discharge inlet 11 of the sewage discharge box 1 serves as a leading-in inlet for external sewage, and a sewage discharge outlet 12 of the sewage discharge box 1 serves as a leading-out outlet for sewage flowing through the sewage discharge box 1. The sewage discharge pipe 2 is provided in the sewage discharge box 1 for draining the sewage which enters from the sewage discharge inlet 11. The inlet end 21 of the sewage discharge pipe 2 is connected to the sewage discharge inlet 11 so that sewage outside the sewage discharge box assembly flows into an inner cavity of the sewage discharge pipe 2 through the sewage discharge inlet 11 and the inlet end 21 of the sewage discharge pipe 2, and finally flows out from the sewage discharge outlet 12 of the sewage discharge box 1.

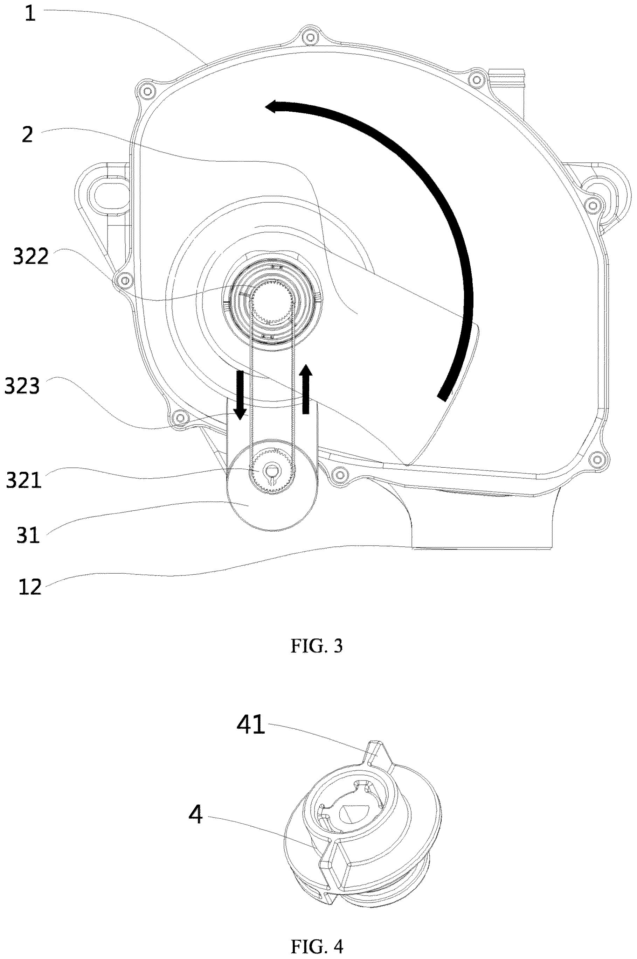

The driving apparatus 3 is used to provide power support for the rotation of the sewage discharge pipe 2 to do switching actions between the initial state and the sewage discharge state. The driving apparatus 3 includes a driving element 31 and a transmission mechanism 32, the driving element 31 provides a driving force for switching the sewage discharge pipe 2 between the initial state and the sewage discharge state, and the transmission mechanism 32 is used for transmitting the driving force provided by the driving element 31 to the sewage discharge pipe 2. As shown in FIG. 1, the driving element 31 is connected to the sewage discharge pipe 2 through the transmission mechanism 32, so that the driving force provided by the driving element 31 is transmitted to the sewage discharge pipe 2 through the transmission mechanism 32. An initial position and action range of the driving element 31 and the transmission mechanism 32 can be set in advance, so that the sewage discharge pipe 2 can be driven to rotate within a predetermined range of motion so as to switch the sewage discharge pipe 2 between the initial state and the sewage discharge state. Thus, the driving apparatus 3 may drive the sewage discharge pipe 2 to rotate so as to switch between the initial state shown in FIG. 2 and the sewage discharge state shown in FIG. 3.

As shown in FIG. 1, an axis 311 of an output shaft of the driving element 31 is not collinear with a rotation axis 22 of the sewage discharge pipe 2, and the axis 311 is distanced from the rotation axis 22. Conversely, when the axis 311 of the output shaft of the driving element 31 is collinear with the rotation axis 22 of the sewage discharge pipe 2, the driving element 31 and the sewage discharge pipe 2 are arranged side by side in a direction of the rotation axis 22 of the sewage discharge pipe 2 (e.g., in a front and rear direction), so that a size of the toilet in the front and rear direction is large, a volume of the toilet is large, and an installation space occupied by the toilet is large. The axis 311 of the output shaft of the driving element 31 is provided to be not collinear with the rotation axis 22 of the sewage discharge pipe 2, so that a side by side arrangement of the driving element 31 and the sewage discharge pipe 2 in the direction of the rotation axis 22 of the sewage discharge pipe 2 is avoided. This is beneficial to reducing a size of the sewage discharge box assembly in the direction of the rotation axis 22 of the sewage discharge pipe 2, so that a size of the entire sewage discharge box assembly in the direction of the rotation axis 22 may be reduced, and more internal space of the toilet in which the sewage discharge box assembly is located may be saved so as to meet other structural design requirements. And, this is beneficial to reducing a size of the entire toilet in the direction of the rotation axis 22 of the sewage discharge pipe 2, reducing a volume of the toilet and installation space occupied by the toilet, and improving the application range of the toilet.

As shown in FIG. 1, in the sewage discharge box assembly of the toilet in some exemplary embodiments, the sewage discharge pipe 2 is provided with a driving part 24 that is in transmission cooperation with the transmission mechanism 32, and the driving part 24 is provided opposite to the sewage discharge inlet 11. The driving element 31 and the sewage discharge inlet 11 are respectively located on two sides of the sewage discharge pipe 2 that are not opposite to each other.

As shown in FIG. 1, the sewage discharge pipe 2 is provided with the driving part 24 that is in transmission cooperation with the transmission mechanism 32, a mounting cavity 13 is provided in the sewage discharge box 1, and the driving part 24 is rotatably installed in the mounting cavity 13. A rotary connector 4 connected to the driving part 24 is also installed in the mounting cavity 13, and the transmission mechanism 32 is connected to the driving part 24 through the rotary connector 4.

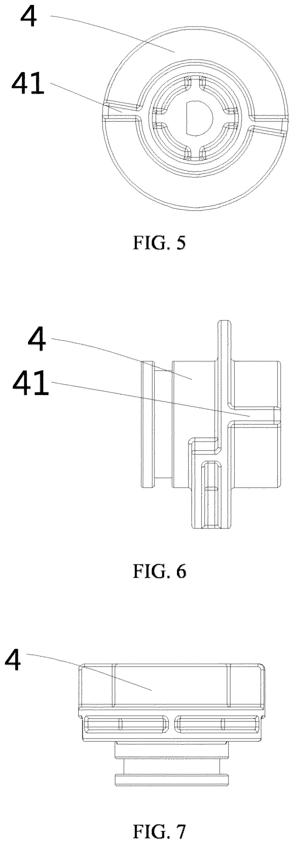

A mounting cavity 13 is provided at one end of the sewage discharge box 1 opposite to the sewage discharge inlet 11 for installing and accommodating the driving part 24 and the rotary connector 4 so that the driving part 24 is provided opposite to the sewage discharge inlet 11. As shown in FIGS. 4-7, the rotary connector 4 is provided with a protruding rib 41. The driving part 24 is a groove for cooperating with the rib 41. By the cooperation between the rib 41 and the groove, the transmission connection between the rotary connector 4 and the sewage discharge pipe 2 is realized. The rotary connector 4 is connected to the transmission mechanism 32, so that the driving force of the driving apparatus 3 is transmitted to the sewage discharge pipe 2, and the sewage discharge pipe 2 is driven to flip smoothly and stably, so as to smoothly switch the sewage discharge pipe 2 between the initial state and the sewage discharge state.

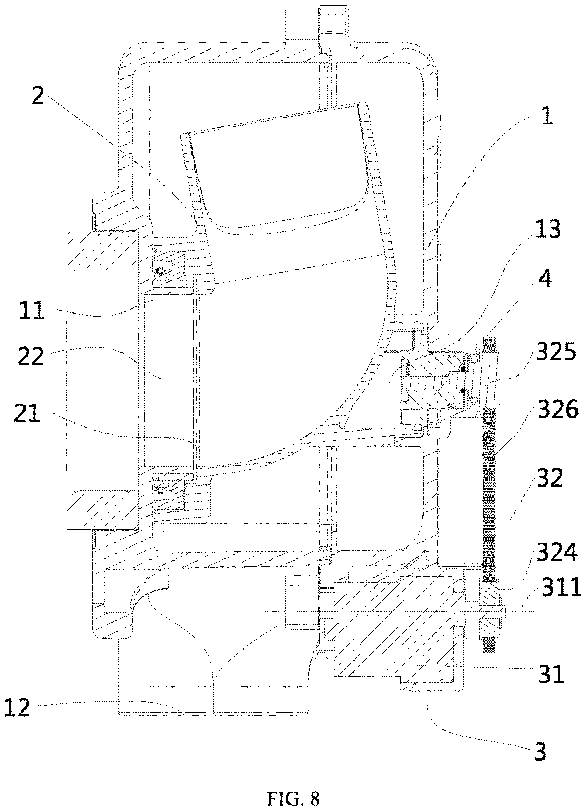

In an embodiment shown in FIGS. 1 and 8, the driving element 31 and the sewage discharge inlet 11 are respectively provided on two sides of the sewage discharge pipe 2 that are not opposite to each other, so that an axis 311 of an output shaft of the driving element 31 is not collinear with a rotation axis 22 of the sewage discharge pipe 2. This is beneficial to reducing a size of the sewage discharge box assembly in a direction of the rotation axis 22 of the sewage discharge pipe 2.

In some exemplary embodiments, as shown in FIGS. 1 and 8, a first side (such as a left side in FIGS. 1 and 8) of the sewage discharge box 1 is provided with a sewage discharge inlet 11, and a second side (such as a lower side in FIGS. 1 and 8) of the sewage discharge box 1 adjacent to the first side is provided with a protruding sewage discharge outlet 12. A driving element 31 is provided outside the sewage discharge box 1 and located on the second side of the sewage discharge box 1, and the driving element 31 is located on a side of the sewage discharge outlet 12 away from the sewage discharge inlet 11. An axis 311 of the output shaft of the driving element 31 is parallel to a rotation axis 22 of the sewage discharge pipe 2.

As shown in FIGS. 1 and 8, the first side of the sewage discharge box 1 (as shown on the left side in FIGS. 1 and 8) is provided with the sewage discharge inlet 11, which serves as a leading-in port for sewage outside the sewage discharge box assembly. The second side (such as the lower side of FIGS. 1 and 8) of the sewage discharge box 1 adjacent to the first side is provided with the protruding sewage discharge outlet 12, which serves as a leading-out port for sewage flowing through the sewage discharge pipe 2. The driving element 31 is provided outside the sewage discharge box 1, so that a separation of water and electricity is realized, and the safety of the driving element 31 is improved. The driving element 31 is located on the second side of the sewage discharge box 1, and the driving element 31 is located on a side of the sewage discharge outlet 12 away from the sewage discharge inlet 11, so that the driving element 31 is placed in a space on a side of the protruding sewage discharge outlet 12 away from the sewage discharge inlet 11, which is beneficial to reducing a volume of the sewage discharge box assembly. At this time, the axis 311 of the output shaft of the driving element 31 is parallel to, but not collinear with, the rotation axis 22 of the sewage discharge pipe 2.

In an embodiment of FIGS. 1 and 8, the axis 311 of the output shaft of the driving element 31 of the sewage discharge box assembly is provided in parallel with the rotation axis 22 of the sewage discharge pipe 2. The parallel arrangement structure facilitates an arrangement of a transmission mechanism 32 between the driving element 31 and the sewage discharge pipe 2. For example, only a general and conventional transmission mechanism 32, such as a chain, belt, rack, and the like needs to be arranged between the axis 311 and the rotation axis 22 to transmit the driving force of the driving element 31 to the sewage discharge pipe 2. Therefore, this structure simplifies a design of the transmission mechanism 32 and reduces a cost, and makes a size occupied by the transmission mechanism 32 in the direction of the rotation axis 22 smaller. That is, a function of driving the sewage discharge pipe 2 to flip and switch is realized without occupying a large space outside the sewage discharge box 1. Therefore, a size of the entire sewage discharge box assembly in the direction of the rotation axis 22 may be shortened, and more internal space of the toilet in which the sewage discharge box assembly is located may be saved, so as to meet other structural design requirements.

In some exemplary embodiments, as shown in FIGS. 1-3, the transmission mechanism 32 includes a driving wheel 321, a driven wheel 322, and a transmission belt 323. The driving wheel 321 is connected to the driving element 31, the driven wheel 322 is connected to the driving part 24, and the transmission belt 323 is sleeved outside the driving wheel 321 and the driven wheel 322.

In an embodiment shown in FIGS. 1-3, the transmission mechanism 32 includes a driving wheel 321, a driven wheel 322, and a transmission belt 323. The driving wheel 321 and the driven wheel 322 may both be gears, and the transmission belt 323 may be a toothed belt. Compared with a transmission mechanism of ordinary flat belt and wheel, the transmission of gear and toothed belt is more stable, not easy to slip, and the transmission contact surface is small, relative wear is small, and the service life is long. The transmission mechanism 32 adopts belt and wheel, the cost is relatively low, the structure is simple, an installation and debugging are relatively easy, and it is suitable for flipping and switching of the sewage discharge for sewage discharge boxes of some small toilet with a relatively small transmission force.

The driving wheel 321 is provided to be connected to and fixed to the output shaft of the driving element 31, a driven wheel 322 is provided to be connected to the driving part 24 by a rotary connector 4, and a transmission belt 323 is provided to be sleeved outside the driving wheel 321 and the driven wheel 322. As a result, the driving element 31 transmits a driving force to the sewage discharge pipe 2 through the driving wheel 321, the driven wheel 322, the transmission belt 323, the rotary connector 4, and the driving part 24, and drives the sewage discharge pipe 2 to switch between the initial state and the sewage discharge state (as shown in FIGS. 2-3).

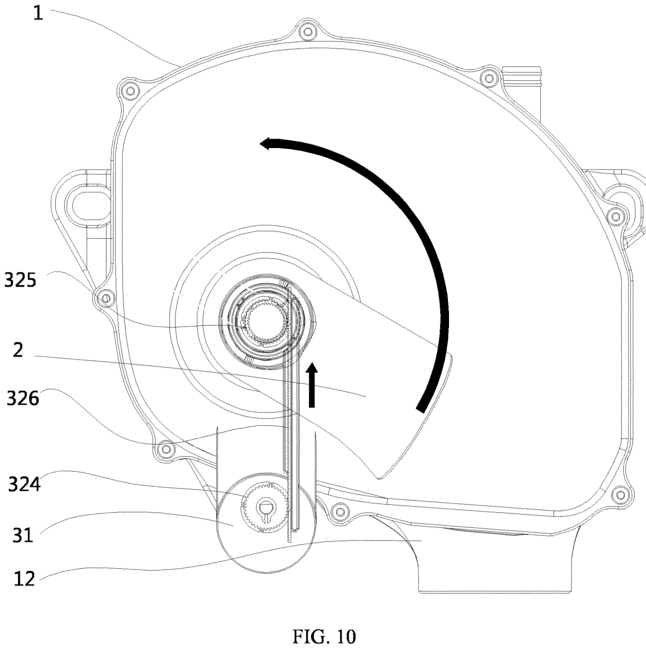

In other exemplary embodiments, as shown in FIGS. 8-10, the transmission mechanism 32 includes a driving gear 324, a driven gear 325, and a rack 326. The driving gear 324 is connected to the driving element 31, the driven gear 325 is connected to the driving part 24, and the driving gear 324 and the driven gear 325 are both engaged with the rack 326 for transmission.

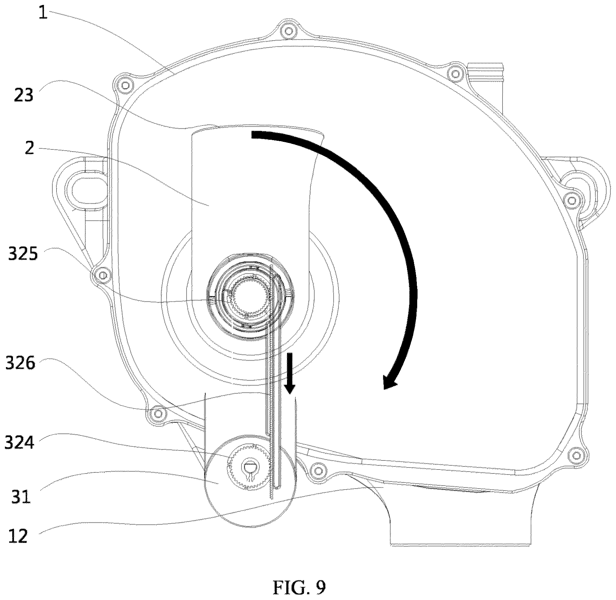

In an embodiment shown in FIGS. 8-10, the transmission mechanism 32 includes a driving gear 324, a driven gear 325, and a rack 326. The rack 326 may be selected from a national standard straight rack, which is relatively cost-efficient and easy to replace and debug. The driving gear 324 is provided to be connected to and fixed to the output shaft of the driving element 31, the driven gear 325 is provided to be connected to the driving part 24 by the rotary connector 4, the rack 326 is provided on a same side of the driving gear 324 and the driven gear 325, and the rack 326 may be engaged with the driving gear 324 and the driven gear 325 for transmission. As a result, the driving element 31 transmits a driving force to the sewage discharge pipe 2 through the driving gear 324, the rack 326, the driven gear 325, the rotary connector 4, and the driving part 24, and drives the sewage discharge pipe 2 to switch between the initial state and the sewage discharge state (as shown in FIGS. 9-10).

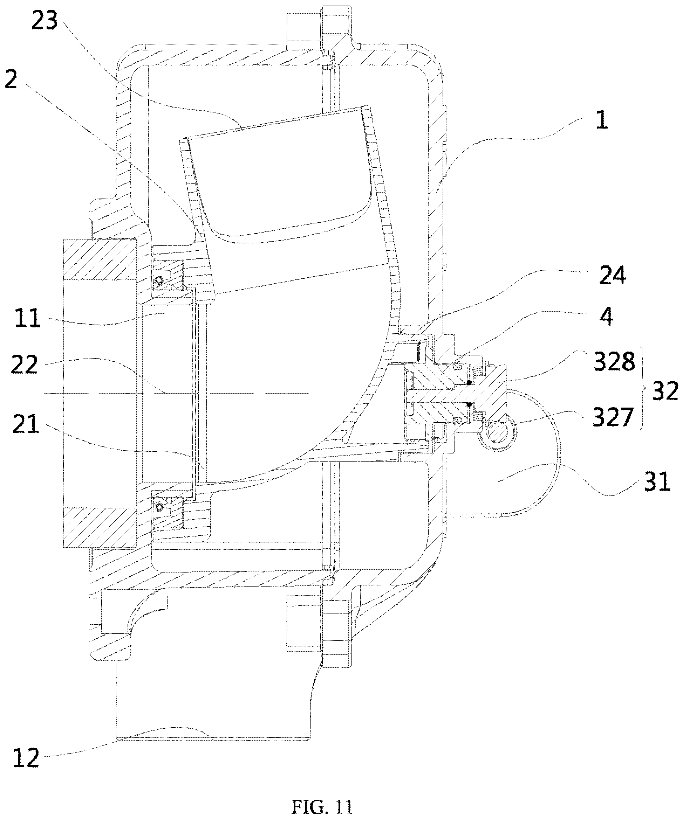

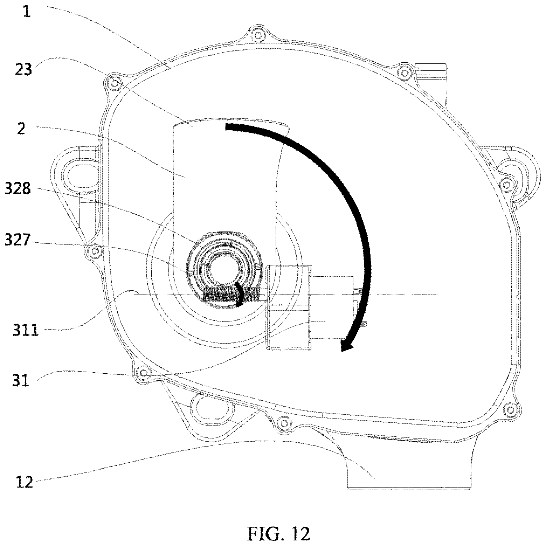

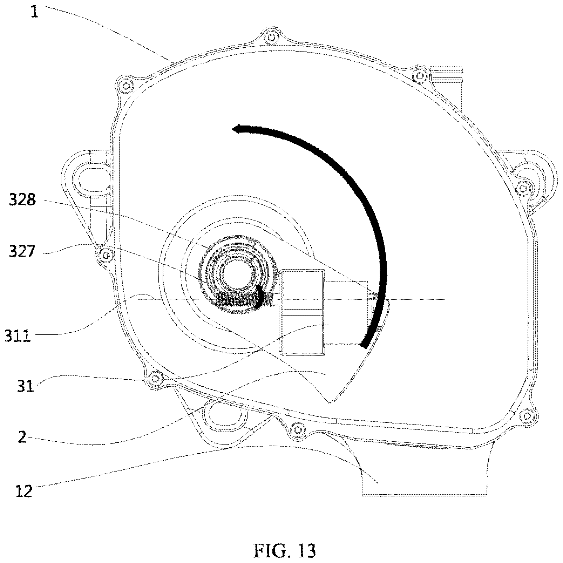

In yet some other exemplary embodiments, as shown in FIGS. 11-13, the sewage discharge pipe 2 is provided with a driving part 24 that is in transmission cooperation with the transmission mechanism 32. The driving part 24 is provided opposite to the sewage discharge inlet 11, and the driving element 31 and the sewage discharge inlet 11 are respectively located on two sides of the sewage discharge pipe 2 that are opposite to each other.

The sewage discharge pipe 2 is provided with a driving part 24 that is in transmission cooperation with the transmission mechanism 32. A mounting cavity 13 is provided in the sewage discharge box 1. The driving part 24 is rotatably installed in the mounting cavity 13. A rotary connector 4 connected to the driving part 24 is also installed in the mounting cavity 13. The transmission mechanism 32 is connected to the driving part 24 through the rotary connector 4. The mounting cavity 13 may be provided at one end of the sewage discharge box 1 opposite to the sewage discharge inlet 11 for installing and accommodating the driving part 24 and the rotary connector 4 so that the driving part 24 is provided opposite to the sewage discharge inlet 11. The rotary connector 4 is provided with a protruding rib 41, and the driving part 24 is a groove for cooperating with the rib 41. Through the cooperation between the rib 41 and the groove, a transmission connection between the rotary connector 4 and the sewage discharge pipe 2 is realized, and the rotary connector 4 is connected to the transmission mechanism 32, so that a driving force of the driving apparatus 3 is transmitted to the sewage discharge pipe 2, and the sewage discharge pipe 2 is driven to flip smoothly and stably, so as to smoothly switch the sewage discharge pipe 2 between the initial state and the sewage discharge state.

In an embodiment shown in FIGS. 11-13, the driving element 31 and the sewage discharge inlet 11 are respectively provided on two sides of the sewage discharge pipe 2 that are opposite to each other, but the axis 311 of the output shaft of the driving element 31 is not collinear with the rotation axis 22 of the sewage discharge pipe. For example, the axis 311 of the output shaft of the driving element 31 may be provided perpendicular to the rotation axis 22 of the sewage discharge pipe 2, which also helps to reduce the size of the sewage discharge box assembly in the direction of the rotation axis 22.

In an embodiment shown in FIGS. 11-13, the axis 311 of the output shaft of the driving element 31 is provided perpendicular to the rotation axis 22 of the sewage discharge pipe 2, and a transmission part for changing a direction of transmission, such as a turbine and worm, a helical gear, and the like, is provided between the driving element 31 and the driving part 24. In this way, the driving apparatus 3 may drive the driving part 24 and the sewage discharge pipe 2, so as to further expand a spatial range of an arrangement of the driving element 31 and the transmission mechanism 32 and a type of the transmission mechanism 32, and it is not limited that the axis 311 of the output shaft of the driving element 31 must be perpendicular to the rotation axis 22 of the sewage discharge pipe 2.

In an embodiment shown in FIGS. 11-13, the transmission mechanism 32 includes a worm 327 and a helical gear 328. The worm 327 is connected to a driving element 31, the helical gear 328 is connected to a driving part 24, and the worm 327 is engaged with the helical gear 328 for transmission.

The transmission mechanism 32 includes the worm 327 and the helical gear 328, the worm 327 is provided to be connected to and fixed to the output shaft of the driving element 31, the helical gear 328 is provided to be connected to the driving part 24 by the rotary connector 4, and the worm 327 is engaged with the helical gear 328 for transmission. As a result, through the worm 327, the helical gear 328, the rotary connector 4, and the driving part 24, the driving element 31 may drive the sewage discharge pipe 2 to realize an action of flipping and switching.

In any of the above exemplary embodiments, as shown in FIGS. 1-3 and 8-13, the sewage discharge pipe 2 is an arc-shaped pipe, the inlet end 21 of the sewage discharge pipe 2 is sleeved with the sewage discharge inlet 11, and the rotation axis 22 of the sewage discharge pipe 2 is collinear with a central axis of the sewage discharge inlet 11.

The inlet end 21 of the sewage discharge pipe 2 is provided to be sleeved with the sewage discharge inlet 11 so that sewage outside the sewage discharge box assembly flows into the sewage discharge pipe 2 from the sewage discharge inlet 11 and the inlet end 21 of the sewage discharge pipe 2. The inlet end 21 of the sewage discharge pipe 2 is sealably connected with the sewage discharge inlet 11 to prevent sewage from leakage. The inlet end 21 of the sewage discharge pipe 2 is provided to be sleeved with the sewage discharge inlet 11 so that the rotation axis 22 of the sewage discharge pipe 2 is collinear with the central axis of the sewage discharge inlet 11. In this way, the sewage discharge inlet 11 may support the sewage discharge pipe 2, the sewage discharge pipe 2 may be rotated around the common central axis of the sewage discharge pipe 2 and the sewage discharge inlet 11, and there will be no leakage due to a detachment of the sewage discharge pipe from the sewage discharge inlet 11 when the sewage discharge pipe flips.

In any of the above exemplary embodiments, in the sewage discharge state, an outlet end 23 of the sewage discharge pipe 2 faces the sewage discharge outlet 12. In the initial state, the outlet end 23 of the sewage discharge pipe 2 faces away from the sewage discharge outlet 12 and is in a water seal state.

FIGS. 2-3, 9-10 and 12-13 show schematic diagrams of structures of the sewage discharge box assembly in an initial state and in a sewage discharge state. The sewage discharge box assembly shown in FIGS. 2, 9, and 12 is in an initial state, and the outlet end 23 of the sewage discharge pipe 2 faces away from the sewage discharge outlet 12. At this time, the outlet end 23 of the sewage discharge pipe 2 faces upwards, and the outlet end 23 of the sewage discharge pipe 2 is not lower than (e.g. higher than) a water seal liquid level in the toilet body 5. The sewage discharge pipe 2 is in a water seal state, so that the water in the toilet body 5 does not flow out from the sewage discharge box 1, and the water seal and anti-odor function is realized. The sewage discharge box assembly shown in FIGS. 3, 10, and 13 is in the sewage discharge state, and the outlet end 23 of the sewage discharge pipe 2 faces the sewage discharge outlet 12. At this time, the outlet end 23 of the sewage discharge pipe 2 faces downwards, so that sewage in the toilet body 5 is conveniently leaded in from the sewage discharge inlet 11 and the sewage discharge pipe 2, and flows out from the sewage discharge outlet 12, thereby realizing the sewage discharge function. The flipping and switching of the sewage discharge pipe 2 from the initial state shown in FIGS. 2, 9, and 12 to the sewage discharge state shown in FIGS. 3, 10, and 13, and the flipping and switching of the sewage discharge pipe 2 from the sewage discharge state shown in FIGS. 3, 10, and 13 to the initial state shown in FIGS. 2, 9, and 12 are performed by the driving apparatus 3, and arc arrows in the figures indicate rotation directions of the sewage discharge pipe 2.

The process of switching the sewage discharge pipe 2 of the sewage discharge box assembly between the initial state and the sewage discharge state is as follows.

When the sewage discharge pipe 2 of the sewage discharge box assembly is in the initial state, the outlet end 23 of the sewage discharge pipe 2 faces away from the sewage discharge outlet 12, and since the water seal liquid level in the toilet body 5 is not higher than the outlet end 23 of the sewage discharge pipe 2, the water for water seal for the toilet body 5 does not flow out through the sewage discharge pipe 2, so as to realize the water seal function. When the driving apparatus 3 receives a state switching command, the driving element 31 drives the sewage discharge pipe 2 to rotate in a clockwise direction through the transmission mechanism 32 and the driving part 24 to reach the sewage discharge state. At this time, the outlet end 23 of the sewage discharge pipe 2 faces the sewage discharge outlet 12 to enter the sewage discharge state.

When the sewage discharge pipe 2 of the sewage discharge box assembly is in the sewage discharge state, the outlet end 23 of the sewage discharge pipe 2 faces the sewage discharge outlet 12, and sewage in the toilet body 5 flows into the sewage discharge pipe 2 of the sewage discharge box assembly and flows out from the sewage discharge outlet 12. When the driving apparatus 3 receives the state switching command, the driving element 31 drives the sewage discharge pipe 2 to rotate in a counterclockwise direction through the transmission mechanism 32 and the driving part 24 to reach the initial state. At this time, the outlet end 23 of the sewage discharge pipe 2 faces away from the sewage discharge outlet 12, and the outlet end 23 of the sewage discharge pipe 2 is not lower than the water seal liquid level in the toilet body 5, so that the sewage discharge pipe 2 enters the initial water seal state.

It should be understood that the initial state of the sewage discharge pipe 2 may not be the water seal state. That is, in the initial state, the outlet end 23 of the sewage discharge pipe 2 may be lower than the water seal liquid level in the toilet body 5. At this time, the water seal function can be realized by other structures.

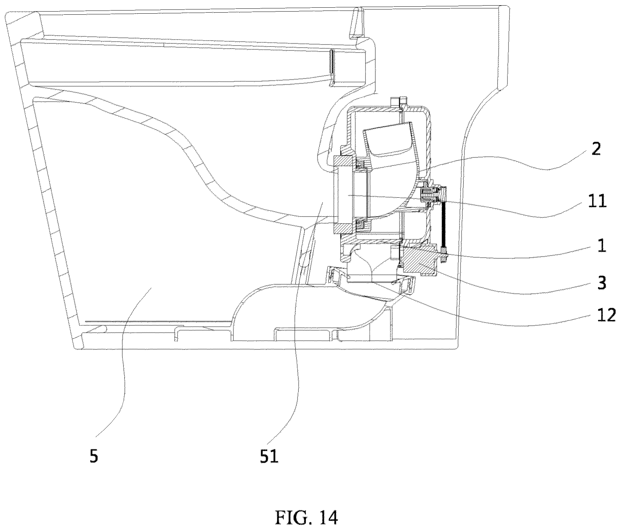

An embodiment of the present application also provides a toilet, as shown in FIG. 14, including a toilet body 5. The toilet body 5 has a sewage discharge port 51. The toilet further includes the sewage discharge box assembly of the toilet according to any of the above exemplary embodiments. The sewage discharge port 51 of the toilet body 5 is communicated with the sewage discharge inlet 11 of the sewage discharge box assembly.

The toilet further includes the sewage discharge box assembly of the toilet according to any of the above exemplary embodiments, so the toilet according to the embodiment of the present application has the characteristics and advantages of the sewage discharge box assembly according to any of the above exemplary embodiments, which will not be described herein in detail. The sewage discharge port 51 of the toilet body 5 is communicated with the sewage discharge inlet 11 of the sewage discharge box assembly, and the sewage discharge outlet 12 of the sewage discharge box assembly may be connected with a sewer pipe. In this way, sewage in the toilet body 5 is leaded in the sewage discharge pipe 2 of the sewage discharge box assembly through the sewage discharge inlet 11 of the sewage discharge box assembly, so that sewage in the toilet body 5 may be discharged into the sewer pipe when the sewage discharge pipe 2 is rotated to the sewage discharge state. After sewage is discharged, the water in the toilet body 5 may not be discharged when the sewage discharge pipe 2 is rotated to the water seal state (initial state), so that the water seal and anti-odor function is realized.

In the description of this specification, descriptions with reference to terms "one implementation", "certain implementations", "schematic implementations", "examples", "specific examples", or "some examples" and the like mean that specific features, structures, materials, or characteristics described in conjunction with the embodiments or examples are included in at least one implementation or example of the present application. In this specification, schematic representations of the above terms do not necessarily refer to the same implementations or examples. Further, the specific features, structures, materials, or characteristics described may be combined in a suitable manner in any one or more implementations or examples.

Although implementations disclosed herein are as described above, the described contents are only implementations used for facilitating understanding of the present application, and are not intended to limit the present application. Without departing from the spirit and scope disclosed herein, any person skilled in the art to which the present application belongs may make any modifications and changes in the form and details of implementation, but the scope of patent protection of the present application shall still be defined by the appended claims.

## Claims

1. A sewage discharge box assembly of a toilet, comprising a sewage discharge box, a sewage discharge pipe and a driving apparatus, wherein the sewage discharge box has a sewage discharge inlet and a sewage discharge outlet, the sewage discharge pipe is provided in the sewage discharge box, and an inlet end of the sewage discharge pipe is connected with the sewage discharge inlet;
the driving apparatus comprises a driving element and a transmission mechanism, the driving element is connected to the sewage discharge pipe through the transmission mechanism and is configured to drive the sewage discharge pipe to rotate so as to switch between an initial state and a sewage discharge state, and an axis of an output shaft of the driving element is not collinear with a rotation axis of the sewage discharge pipe.

2. The sewage discharge box assembly of the toilet according to claim 1, wherein the sewage discharge pipe is provided with a driving part that is in transmission cooperation with the transmission mechanism, the driving part is provided opposite to the sewage discharge inlet, and the driving element and the sewage discharge inlet are respectively located on two sides of the sewage discharge pipe that are not opposite to each other.

3. The sewage discharge box assembly of the toilet according to claim 2, wherein a first side of the sewage discharge box is provided with the sewage discharge inlet, a second side of the sewage discharge box adjacent to the first side is provided with a protruding sewage discharge outlet, the driving element is provided outside the sewage discharge box and located on the second side of the sewage discharge box, and the axis of the output shaft of the driving element is parallel to the rotation axis of the sewage discharge pipe.

4. The sewage discharge box assembly of the toilet according to claim 3, wherein the driving element is located on a side of the sewage discharge outlet away from the sewage discharge inlet.

5. The sewage discharge box assembly of the toilet according to claim 2, wherein the transmission mechanism comprises a driving wheel, a driven wheel, and a transmission belt, wherein the driving wheel is connected to the driving element, the driven wheel is connected to the driving part, and the transmission belt is sleeved outside the driving wheel and the driven wheel; or
the transmission mechanism comprises a driving gear, a driven gear, and a rack, wherein the driving gear is connected with the driving element, the driven gear is connected with the driving part, and the driving gear and the driven gear are both engaged with the rack for transmission.

6. The sewage discharge box assembly of the toilet according to claim 1, wherein the sewage discharge pipe is provided with a driving part that is in transmission cooperation with the transmission mechanism, the driving part is provided opposite to the sewage discharge inlet, and the driving element and the sewage discharge inlet are respectively located on two sides of the sewage discharge pipe that are opposite to each other.

7. The sewage discharge box assembly of the toilet according to claim 6, wherein the driving element is located outside the sewage discharge box and the axis of the output shaft of the driving element is perpendicular to the rotation axis of the sewage discharge pipe.

8. The sewage discharge box assembly of the toilet according to claim 7, wherein the transmission mechanism comprises a worm and a helical gear, the worm is connected to the driving element, the helical gear is connected to the driving part, and the worm is engaged with the helical gear for transmission.

9. The sewage discharge box assembly of the toilet according to any one of claims 2-8, wherein a mounting cavity is provided in the sewage discharge box, the driving part is rotatably installed in the mounting cavity, a rotary connector connected to the driving part is also installed in the mounting cavity, and the transmission mechanism is connected to the driving part through the rotary connector.

10. The sewage discharge box assembly of the toilet according to claim 9, wherein one of the rotary connector and the driving part is provided with a protruding rib and the other of the rotary connector and the driving part is provided with a groove for cooperating with the rib.

11. The sewage discharge box assembly of the toilet according to any one of claims 1-8, wherein the sewage discharge pipe is an arc-shaped pipe, the inlet end of the sewage discharge pipe is sleeved with the sewage discharge inlet, and the rotation axis of the sewage discharge pipe is collinear with a central axis of the sewage discharge inlet.

12. The sewage discharge box assembly of the toilet according to any one of claims 1-8, wherein in the sewage discharge state, an outlet end of the sewage discharge pipe faces the sewage discharge outlet; in the initial state, the outlet end of the sewage discharge pipe faces away from the sewage discharge outlet and is in a water seal state.

13. A toilet, comprising a toilet body, wherein the toilet body has a sewage discharge port, and the toilet further comprises the sewage discharge box assembly of the toilet according to any one of claims 1-12, wherein the sewage discharge port is communicated with the sewage discharge inlet of the sewage discharge box assembly.

14. The toilet according to claim 13, wherein in the initial state, an outlet end of the sewage discharge pipe is configured to be not lower than a water seal liquid level in the toilet body.
